# EUROPÄISCHE PATENTSCHRIFT

(11) **EP 2 711 594 B1**
(45) Veröffentlichungstag und Bekanntmachung des Hinweises auf die Patenterteilung: **13.09.2017**
(21) Anmeldenummer: 13004625.3
(22) Anmeldetag: 23.09.2013
(51) Int. Cl.: F16K 1/42, F16K 1/44, F16K 31/06

(54) **Ventil**
Valve
Soupape

(30) Priorität: 24.09.2012 DE 102012019193
(43) Veröffentlichungstag der Anmeldung: 26.03.2014
(73) Patentinhaber: Hydac Electronic GmbH, 66128 Saarbrücken (DE)
(72) Erfinder: Patrik Fuchs, 66459 Kirkel (DE); Frank Kattler, 66346 Püttlingen (DE); Christian Groh, 66453 Gersheim (DE)
(74) Vertreter: Bartels & Partner

(56) Entgegenhaltungen:
- AT-B- 345 048
- DE-A1-102011 018 873
- DE-C- 927 664
- DE-U- 7 220 684
- GB-A- 2 240 835
- US-A1- 2012 115 060
- US-A1- 2013 168 584

## Beschreibung

Die Erfindung betrifft ein Ventil, insbesondere Proportional-Druckregelventil für pneumatische Anwendungen, mit den Merkmalen im Oberbegriff von Anspruch 1.

Ventile dieser Art sind Stand der Technik. Häufig werden solche Ventile zur Regelung der Druckversorgung bei Pneumatiksystemen eingesetzt.

Die DE 10 2011 018 873 A1 zeigt ein Ventil, insbesondere Proportional-Druckregelventil für pneumatische Anwendungen, auf mit einem Ventilkörper auf, der zur Regelung eines Medienflusses zwischen zumindest einem ersten und einem zweiten Medienanschluss mittels einer Betätigungseinrichtung längs einer Verfahrachse zwischen einer Schließstellung, in der er durch Anlage an einem Sitzkörper den Mediendurchfluss sperrt, und vom Ventilsitzkörper abgehobenen Regelstellungen verfahrbar ist, wobei der Sitzkörper eine Dichtfläche aufweist, die in einer zur Verfahrachse senkrechten Ebene liegt und in geschlossener Linie die Mündung eines Medienkanals umgibt, der sich vom ersten Medienanschluss in Richtung auf den Ventilkörper erstreckt, und dass der Ventilkörper eine plattenförmig ausgebildete Dichteinrichtung aufweist, die mit ihrer Schließfläche mit der Dichtfläche zusammenwirkt.

Die DE 72 20 684 U beschreibt ein Ventil, bei dem der Sitzkörper mindestens eine Stützfläche aufweist, die in einer zu der Dichtfläche parallelen Ebene liegt und die Dichtfläche in einem Abstand umgibt und an der Stützfläche mindestens ein Mediendurchlass gebildet ist, der eine Verbindung zwischen dem zweiten Medienanschluss und dem zwischen Stützfläche und Dichtfläche befindlichen Raum bildet.

In der DE 19 98 346 U wird ein Ventil beschrieben, bei dem vier herausragende Teile um einen Ventilsitz angeordnet sind, wobei die eigentlichen Stützflächen der herausragenden Teile in der gleichen Ebene wie der Ventilsitz liegen.

Ausgehend von diesem Stand der Technik stellt sich die Erfindung die Aufgabe, ein Ventil dieser Gattung zur Verfügung zu stellen, das sich bei einfachem konstruktivem Aufbau durch ein günstiges Betriebsverhalten auszeichnet.

Erfindungsgemäß ist diese Aufgabe durch ein Ventil gelöst, das die Merkmale des Patentanspruchs 1 in seiner Gesamtheit aufweist.

Nach dem kennzeichnenden Teil des Anspruchs 1 besteht eine wesentliche Besonderheit der Erfindung darin, dass der Sitzkörper mindestens eine Stützfläche aufweist, die in einer zu der Dichtfläche parallelen Ebene liegt und die Dichtfläche in einem Abstand umgibt, dass an der Stützfläche mindestens ein Mediendurchlass gebildet ist, der eine Verbindung zwischen dem zweiten Medienanschluss und dem zwischen Stützfläche und Dichtfläche befindlichen Raum bildet, und dass Dichtfläche und Stützfläche in einer gemeinsamen, zur Verfahrachse senkrechten Ebene liegen.

Eine derartige Sitzgeometrie führt einerseits zu einem günstigen Öffnungsverhalten des Ventils bei Übergängen aus der Schließstellung und zeichnet sich zum anderen durch eine hohe Betriebssicherheit aus, da die Stützfläche die Belastungen der Dichtplatte bei Bewegungen in die Schließstellung abmildert und dadurch die Lebensdauer erhöht.

Es ist vorgesehen, dass der Sitzkörper eine Dichtfläche aufweist, die in einer zur Verfahrachse senkrechten Ebene liegt und in geschlossener Linie die Mündung eines Medienkanals umgibt, der sich vom ersten Medienanschluss in Richtung auf den Ventilkörper erstreckt, wobei der Ventilkörper eine vorzugsweise plattenförmig ausgebildete Dichteinrichtung aufweist, die mit ihrer Schließfläche mit der Dichtfläche zusammenwirkt. Diese Ventilbauweise mit einer Kombination aus einem zur Verfahrachse des Ventilkörpers koaxialen Medienkanal, der in einer zur Verfahrachse in senkrechter Ebene liegenden Dichtfläche endet, mit einer am Ventilkörper vorgesehenen Dichtplatte führt zum einen besonders günstigen Betriebsverhalten des Ventils, insbesondere wenn das Ventil für pneumatische Anwendungen zur Steuerung einer Druckluftversorgung vorgesehen ist.

Bei besonders vorteilhaften Ausführungsbeispielen ist die Stützfläche an einem Ringkörper gebildet, der zwischen sich und der Dichtfläche einen Raum in Form einer axialen Vertiefung des Ventilsitzes umgibt, wobei als Mediendurchlass mindestens eine Bohrung im Ringkörper vorgesehen ist.

Anstelle eines die Stützfläche ausbildenden vollen Ringkörpers kann die Stützfläche auch aus Ringsegmenten gebildet sein, die die Dichtfläche im Abstand umgeben, wobei als Mediendurchlass mindestens eine Lücke zwischen aufeinanderfolgenden Ringsegmenten vorgesehen sein kann.

In besonders vorteilhafter Weise kann die Anordnung so getroffen sein, dass Dichtfläche und Stützfläche kreisrund und zur Verfahrachse konzentrisch sind und dass die zwischen ihnen befindliche Vertiefung die Form eines Ringraums besitzt. Bei solcher Gestaltung als Rotationskörper kann der Sitzkörper als einfaches Drehteil rationell und kostengünstig gefertigt werden. Ein derartiges Drehteil mit fertig bearbeiteter Sitzgeometrie kann, ohne Fräsarbeiten durchführen zu müssen und ohne dass aufwendiges Entgraten erforderlich ist, hergestellt werden.

Bei besonders vorteilhaften Ausführungsbeispielen wirken Dichtfläche und Stützfläche mit der am Ventilkörper befindlichen Dichtplatte der Dichteinrichtung zusammen. Als Kontaktflächen für die Anlage der Dichtplatte weisen Dichtfläche und Stützfläche vorzugsweise die Form von ringförmigen, am freien Ende gerundeten Rippen auf.

Alternativ kann die Anordnung so getroffen sein, dass die Stützfläche in einer Ebene liegt, die vom Ventilkörper geringfügig weiter entfernt ist als die Ebene der Dichtfläche. Bei der Schließstellung, bei Anlage der Dichtplatte sowohl an Dichtfläche als auch an Stützfläche, ergibt sich somit eine die sichere Abdichtung begünstigende höhere Flächenpressung an der Dichtfläche als an der Stützfläche.

Für die Zusammenwirkung mit gerundeten Flächen an Dichtfläche und Stützfläche kann in besonders vorteilhafter Weise die aus einem Elastomer oder einem Gummi-Metall-Verbundteil gebildete Dichtplatte am Ventilkörper vorgesehen sein.

Bei bevorzugten Ausführungsbeispielen ist der Ventilkörper mittels einer Schließfeder in die Schließstellung vorgespannt und mittels der Betätigungseinrichtung gegen die Kraft der Feder aus der Schließstellung bewegbar.

Hinsichtlich der Betätigungseinrichtung kann die Anordnung dabei mit besonderem Vorteil so getroffen sein, dass die Betätigungseinrichtung einen im Polrohr einer Elektromagneteinrichtung bewegbaren Anker aufweist, der über einen sich aus dem Polrohr erstreckenden, axialen Fortsatz mit dem Ventilkörper verbunden ist, wobei die Schließfeder den Fortsatz umgibt und zwischen dem Ventilkörper und einem außerhalb des Polrohres befindlichen Teil des Ventilgehäuses eingespannt ist. Dabei kann ein sog. "ziehender" Elektromagnet vorgesehen sein, der den Anker bei Bestromen der Magnetwicklung gegen die Wirkung der Schließfeder zurückzieht und damit den Ventilkörper aus der Schließstellung bewegt.

Gemäß dem Patentanspruch 16 ist Gegenstand der Erfindung auch eine Ventilanordnung, die insbesondere für pneumatische Anwendungen vorgesehen ist und mehr als ein Ventil gemäß einem der Ansprüche 1 bis 15 aufweist.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispiels des erfindungsgemäßen Ventils;
- Fig. 2: eine gegenüber Fig. 1 in größerem Maßstab gezeichnete, perspektivische Schrägansicht des Ventilsitzkörpers des Ausführungsbeispiels von Fig. 1;
- Fig. 3: eine der Fig. 2 ähnliche Darstellung einer abgewandelten Form des Ventilsitzkörpers;
- Fig. 4: eine skizzenhafte, schematische Darstellung zur Verdeutlichung der Anordnung der Dichtfläche und der durch Segmente gebildeten Stützfläche am Ventilsitzkörper von Fig. 3;
- Fig. 5: einen Längsschnitt eines Ausführungsbeispiels einer Ventilanordnung, die zwei Ventile gemäß Ausführungsbeispielen der vorliegenden Erfindung enthält;
- Fig. 6: in vergrößert gezeichnetem Längsschnitt eine abgewandelte Ausführungsform des Ventilsitzkörpers für das Ausführungsbeispiel von Fig. 1;
- Fig. 7 und 8: stärker vergrößerte Teilausschnitte des in Fig. 6 mit VII, VIII gezeichneten Bezirks, wobei unterschiedliche Konfigurationen der Dichtfläche gezeigt sind;
- Fig. 9: in vergrößertem Längsschnitt eine weitere Ausführungsform des Ventilsitzkörpers des Ausführungsbeispiels von Fig. 1; und
- Fig. 10: einen stärker vergrößerten Teilausschnitt des in Fig. 9 mit X bezeichneten Bezirks.

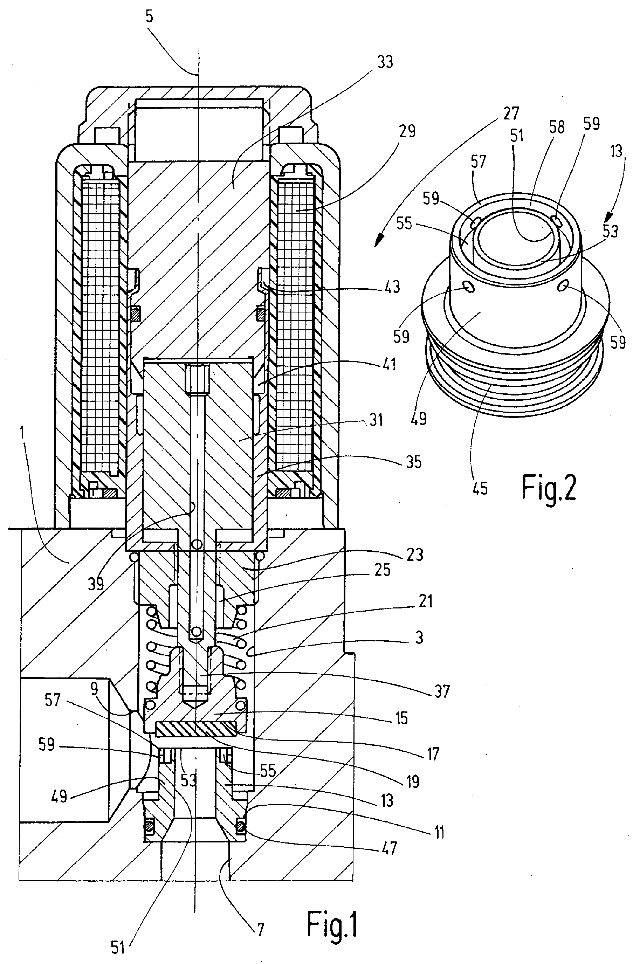

Nachstehend ist die Erfindung anhand von in der Zeichnung dargestellten Beispielen eines Proportional-Druckregelventils für pneumatische Anwendungen erläutert. Das in Fig. 1 gezeigte Ventil weist ein Ventilgehäuse 1 auf, in dem ein Durchgang 3 ausgebildet ist, der auf einem großen Teil kreiszylindrisch ist, wobei die Zylinderachse mit 5 bezeichnet ist. Am in der Zeichnung unteren Ende geht der Durchgang 3 in einen Medienanschluss 7 über, bei dem es sich beim vorliegenden Beispiel um den druck- oder eingangsseitigen P-Anschluss handelt. Oberhalb des Medienanschlusses 7 mündet ein zweiter Medienanschluss 9 als Verbraucher- oder A-Anschluss in den Durchgang 3. Zwischen beiden Anschlüssen 7 und 9 ist in einen unteren, im Durchmesser verjüngten Gewindeabschnitt 11 ein Sitzkörper 13 eingeschraubt, der den gehäusefesten Ventilsitz für das Ventil bildet. Als relativ zum Sitzkörper 13 axial entlang der Achse 5 verfahrbares Ventilelement weist das Ventil einen Ventilkörper 15 auf, der in der Zeichnung in einer vom Sitzkörper 13 abgehobenen Regelposition dargestellt ist, bei der ein Strömungsweg durch das Ventil freigegeben ist. Der Ventilkörper 15 weist an seiner dem Sitzkörper 13 zugewandten Seite eine zur Achse 5 konzentrische axiale Vertiefung 17 auf, deren Durchmesser etwas größer ist als der Durchmesser des benachbarten Endes des Sitzkörpers 13. In der Vertiefung 17 ist eine runde Dichtplatte 19 passend aufgenommen, die aus einem elastomeren Werkstoff gebildet ist. In der (nicht dargestellten) Schließstellung liegt der Ventilkörper 15 mit der Dichtplatte 19 an einer Dichtfläche 53 des Sitzkörpers 13 sowie an einer Stützfläche 57 an. Die spezielle Ausgestaltung der Dichtfläche 53 und der Stützfläche 57 wird unter Bezug auf Fig. 2 bis 4 noch näher erläutert.

In der Schließstellung liegt der Ventilkörper 15 am Sitzkörper 13 mit einer durch eine Schließfeder 21 erzeugten Schließkraft an. Die Schließfeder 21 ist als Schrauben-Druckfeder im Durchgang 3 des Ventilgehäuses 1 angeordnet und stützt sich einerseits am Ventilkörper 15 und andererseits an einem am oberen Ende des Durchgangs 3 befindlichen Einschraubteil 23 ab. Dieses weist eine zentrale, durchgehende Öffnung 25 auf.

Eine als Ganzes mit 27 bezeichnete Betätigungseinrichtung weist eine Elektromagneteinrichtung auf, bei der es sich beim vorliegenden Beispiel um einen sog. "ziehenden" Magneten handelt. Durch Bestromen der zugehörigen Magnetwicklung 29 (dieser Zustand ist in Fig. 1 dargestellt), bewegt sich der Magnetanker 31 innerhalb eines Polrohres 35 an einen Polkern 33 heran. Der Magnetanker 31 weist, koaxial zur Achse 5, einen Fortsatz 37 auf, der durch die Öffnung 25 im Einsatzteil 23 hindurch in den Durchgang 3 des Ventilgehäuses 1 vorspringt. Das Ende des Fortsatzes 37 ist mit dem Ventilkörper 15 verschraubt. Bei der durch Bestromen der Wicklung 29 bewirkten, anziehenden Bewegung des Ankers 31 wird daher der Ventilkörper 15 gegen die Schließkraft der Feder 21 vom Sitzkörper 13 abgehoben, wie in Fig. 1 dargestellt.

In an sich bekannter Weise ist in Fortsatz 37 und Magnetanker 31 ein zentraler Druckausgleichskanal 39 gebildet. Wie ebenfalls an sich bekannt ist, ist zwischen Polrohr 35 und Polkern 33 ein Freiraum 41 zur magnetischen Entkopplung vorgesehen. Bei 43 ist das Polrohr 35 mit dem Polkern 33 verbördelt.

Die Fig. 2 zeigt nähere Einzelheiten einer Ausgestaltung der am Sitzkörper 13 gebildeten und für die Zusammenwirkung mit der Dichtplatte 19 vorgesehenen Dichtfläche 53 und Stützfläche 57. Der Sitzkörper 13 ist ein Rotationskörper, genauer gesagt ein Drehteil aus einem nicht rostenden metallischen Werkstoff, vorzugsweise aus Edelstahl, so dass keine Maßnahmen zum Korrosionsschutz erforderlich sind. Hinsichtlich des Korrosionsschutzes gilt Entsprechendes auch für das Polrohr 35, das aus einem magnetischen Edelstahl gefertigt sein kann. Der Sitzkörper 13 weist ein Außengewinde 45 zum Einschrauben in den Gewindeabschnitt 11 am Übergang zwischen dem Durchgang 3 des Ventilgehäuses 1 und dem Medienanschluss 7 auf, wobei ein O-Ring 47 als Dichtelement vorgesehen ist. Oberhalb des Außengewindes 45 geht der Sitzkörper 13 in ein im Durchmesser verringertes Zylinderteil 49 über. Für die Verbindung mit dem Medienanschluss 7 weist der Sitzkörper 13 einen zur Achse 5 konzentrischen Medienkanal 51 auf. Der dem Ventilkörper 15 zugewandte obere Endrand des Medienkanals 51 bildet die Dichtfläche 53, die kreisrund und linienförmig ist. Radial außerhalb dieser Dichtfläche 53 ist in der dem Ventilkörper 15 zugewandten Frontseite des Sitzkörpers 13 eine Vertiefung in Form eines Ringraums 55 ausgebildet. Dadurch bildet das Zylinderteil 49 einen Ringkörper 58 mit einem kreisrunden Endrand, der als Stützfläche 57 die Dichtfläche 53 in einem radialen Abstand umringt. Für die Zusammenwirkung mit der Dichtplatte 19 sind Stützfläche 57 und Dichtfläche 53 durch kreisrunde Rippen gebildet, die endseitig abgerundet sind. Unter Einwirkung der Schließkraft können sich die so gebildeten Ringrippen leicht in die elastomere Dichtplatte 19 eindrücken.

Zur Bildung eines Mediendurchlasses zwischen dem Ringraum 55 und der Außenseite des Sitzkörpers 13, die mit dem Anschluss 9 in Verbindung steht, sind beim vorliegenden Beispiel vier Bohrungen 59 zwischen Außenseite des Zylinderteils 49 und Ringraum 55 vorgesehen.

Die beim vorliegenden Beispiel vorgesehene Anordnung der Schließfeder 21 innerhalb des Durchgangs 3 des Ventilgehäuses 1, also in einem außerhalb des Polrohres 35 befindlichen Bereich, vermeidet die Gefahr einer magnetischen Sättigung, wie sie bei einer innerhalb des Polrohres angeordneten Federanordnung gegeben ist. Mittels der Elektromagneteinrichtung ist daher eine erhöhte Betätigungskraft über den Hub des Ankers realisierbar.

Bei einer außerhalb des Polrohres 35 befindlichen Feder 21, für die ein vergleichsweise größerer Einbauraum zur Verfügung steht, bietet sich für die Auslegung der Feder 21 auch ein größerer Gestaltungsspielraum, beispielsweise die Möglichkeit einer geringeren Steifigkeit wegen des größeren, zur Verfügung stehenden Windungsdurchmessers, was wiederum eine bessere Regelbarkeit des Ventils ermöglicht.

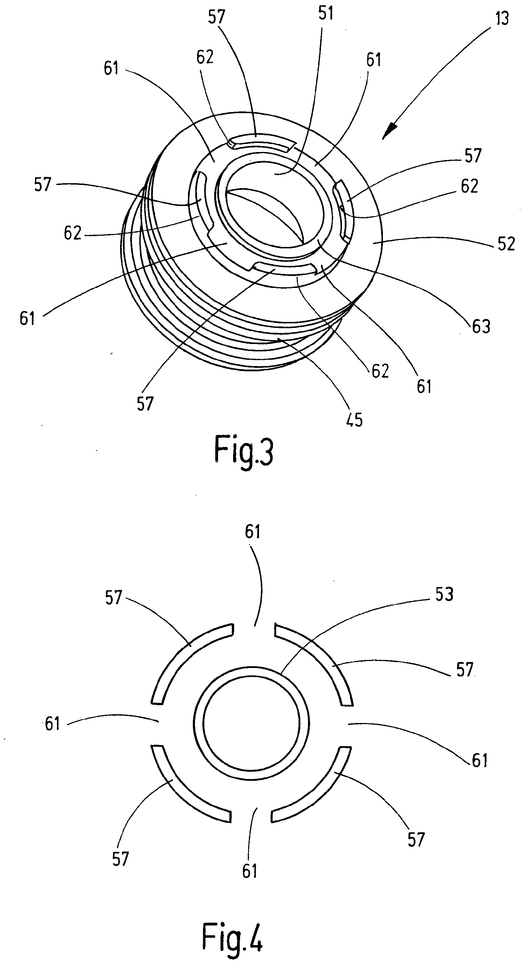

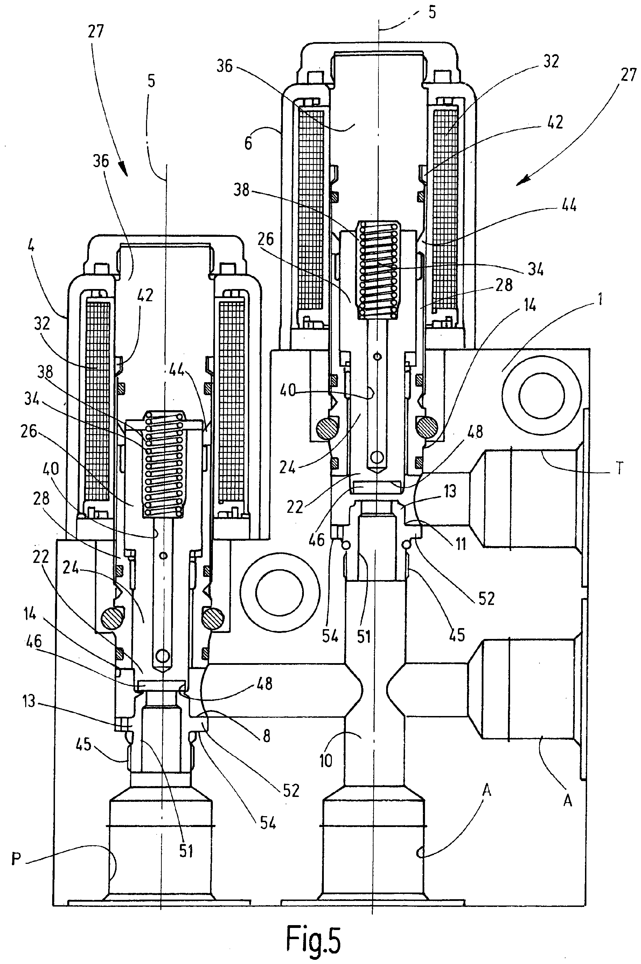

Die Fig. 3 und 4 zeigen die Konfiguration eines abgewandelten Ventilsitzkörpers 13. Dieser hat, wie auch der Ventilsitzkörper 13 von Fig. 2, die Form eines Gewindeeinsatzes, der mit seinem Außengewinde 45 in das zugeordnete Ende der Ventilbohrung 3, 14 des Gehäuses 1 derart einschraubbar ist, dass er mit einem erweiterten Flanschteil 52 an einer am Ende der Ventilbohrung 14 (Fig. 5) gebildeten Stufenfläche 54 anliegt. Aus dem Flanschteil 52 nach oben vorstehende Teile bilden die eigentliche Ventilsitzgeometrie, also diejenigen Teile des Sitzkörpers 13, die für die Zusammenwirkung mit der Dichtplatte 19, 46 des Ventilkörpers 15 vorgesehen sind. Wie die Fig. 3 und 4 zeigen, ist hierbei eine eine geschlossene Dichtlinie bildende Dichtfläche 53 vorgesehen, die, wie beim Beispiel von Fig. 2, durch eine an der Mündung des Medienkanals 51 axial vorspringende Ringrippe gebildet ist. In einem radialen Abstand von dieser kreisrunden, zur Verfahrachse 5 konzentrischen Dichtfläche 53 ist eine Stützfläche 57 vorgesehen, die ebenfalls durch vorspringende Rippen gebildet ist, wobei diese Rippen in diesem Fall lediglich Segmente oder Teilabschnitte eines gedachten Kreises bilden, der die Dichtfläche 53 konzentrisch umgibt. Wiederum liegen die den Anlagebereich für die Dichtplatte 19 bildenden oberen Enden von Dichtfläche 53 und Stützfläche 57 in einer gemeinsamen, zur Verfahrachse 5 senkrechten Ebene, wobei diese oberen Endflächen jeweils gerundet sind. Zwischen den die Stützfläche 57 bildenden Segmenten, von denen beim gezeigten Beispiel vier je einen Teilabschnitt der Stützfläche 57 bildende Segmente gezeigt sind und die eine jeweils gleiche, auf den gedachten Kreis bezogene Umfangsfläche aufweisen. Dementsprechend sind vier Lücken 61, ebenfalls von jeweils gleicher Länge, vorgesehen. Diese Lücken 61 bilden entsprechende Mediendurchlässe, wie sie beim Beispiel von Fig. 2 durch die Bohrungen 59 gebildet sind.

Die Fig. 5 zeigt eine Ventilanordnung, bei der zwei gleich ausgebildete Ventile 4 und 6 vorgesehen sind, bei denen der Ventilsitzkörper 13 jeweils die in Fig. 2 oder die in Fig. 3 und 4 gezeigte Sitzgeometrie aufweist.

Die Ventile 4, 6 bilden mit einem ihnen gemeinsamen Ventilgehäuse 1 einen Ventilblock. Von den am Ventilgehäuse 1 vorgesehenen Medienanschlüssen sind ein zur Druckversorgung, im vorliegenden Fall mit Druckluft, vorgesehener Druckanschluss mit P, zwei Verbraucheranschlüsse mit A und ein Abluftanschluss mit T bezeichnet. Vom Druckanschluss P her versorgt das in Fig. 5 linksseitig gelegene Proportional-Druckregelventil 4 über seinen Ausgang 8 die Verbraucheranschlüsse A über eine Ausgangsleitung 9. Das zweite, gleich ausgebildete Proportional-Druckregelventil 6 ist als Druckbegrenzungsventil eingangsseitig mit der Ausgangsleitung 9 und an seinem Ausgang 12 mit dem Anschluss T in Verbindung.

Das Ventilgehäuse 1 weist für jedes Ventil 4, 6 eine Ventilbohrung 14 auf, die entlang einer Achse 5 verläuft, die für den bewegbaren Ventilkörper 22 der Ventile 4, 6 die Verfahrachse bildet. Beim in Fig. 5 linksseitig gelegenen Ventil 4 ist das untere Ende der Ventilbohrung 14 mit dem Druckanschluss P in Verbindung. Bei dem rechtsseitig gelegenen Ventil 6 ist das untere Ende der Ventilbohrung 14 mit der Ausgangsleitung 10 in Verbindung. An jedem dieser unteren Enden der beiden Ventilbohrungen 14 befindet sich für jedes Ventil 4, 6 ein Ventilsitzkörper 13 mit einem koaxialen, inneren Medienkanal 51, der den Medieneingang für das Ventil 4, 6 bildet. Die spezielle Bauweise des Ventilsitzkörpers 13 ist in den Fig. 2 bis 4 näher dargestellt.

Der für die Zusammenwirkung mit dem Ventilsitzkörper 13 vorgesehene und längs der Achse 5 verfahrbare Ventilkörper 22 ist durch das Ende eines Fortsatzes 24 eines Magnetankers 26 gebildet, der entlang der Achse 5 verfahrbar in einem Polrohr 28 einer als Betätigungseinrichtung vorgesehenen Elektromagneteinrichtung 27 geführt ist. Diese ist in an sich bekannter Weise als sog. "ziehender" Elektromagnet ausgebildet, der bei Bestromen seiner Magnetwicklung 32 den Anker 26 gegen die Kraft einer Schließfeder 34 gegen einen Polkern 36 bewegt. Die Schließfeder 34 ist in einer zentralen Vertiefung 38 im Anker 26 angeordnet und stützt sich am Polkern 36 ab. Eine sich von der Vertiefung 38 in den Fortsatz 24 erstreckende Bohrung 40 bildet einen Druckausgleichskanal zur inneren Ventilbohrung 14 hin. Freiräume 44 zwischen Polrohr 26 und Polkern 36 sind in üblicher Weise zur magnetischen Entkopplung vorgesehen. Bei 42 ist das Polrohr 26 mit dem Polkern 36 verbördelt.

Das in Fig. 5 linksseitig gelegene Ventil 4 befindet sich bei nicht bestromter Magnetwicklung 32 unter Einfluss der Schließfeder 34 in der Schließstellung, in der der Ventilkörper 22 die Abdichtung am Ventilsitzkörper 13 bildet. Für die abdichtende Zusammenwirkung mit dem Sitzkörper 13 weist der Ventilkörper 22 eine Dichtplatte 46 auf. Dabei handelt es sich um eine ebene, kreisrunde Platte aus einem elastomeren Werkstoff, die in einer Vertiefung 48 am Ende des den Ventilkörper 22 bildenden Fortsatzes 24 passend aufgenommen ist und deren Durchmesser etwas größer ist als der Durchmesser des benachbarten Endes des Ventilsitzkörpers 13. Bei dem linksseitig gelegenen Ventil 4 ist die Magnetwicklung 32 unbestromt, so dass sich das Ventil dabei in der Schließstellung befindet. Bei der Darstellung von Fig. 5 ist bei dem rechtsseitig gelegenen Ventil 6 jedoch die Magnetwicklung 32 bestromt, so dass der Anker 26 gegen die Kraft der Schließfeder 34 an den Polkern 36 angezogen ist und sich das Ventil 6 in einer Regelstellung befindet, bei der die Dichtplatte 46 vom Ventilsitzkörper 13 abgehoben ist, wobei in Fig. 5 der Zustand der vollen Öffnung des Ventils 6 dargestellt ist.

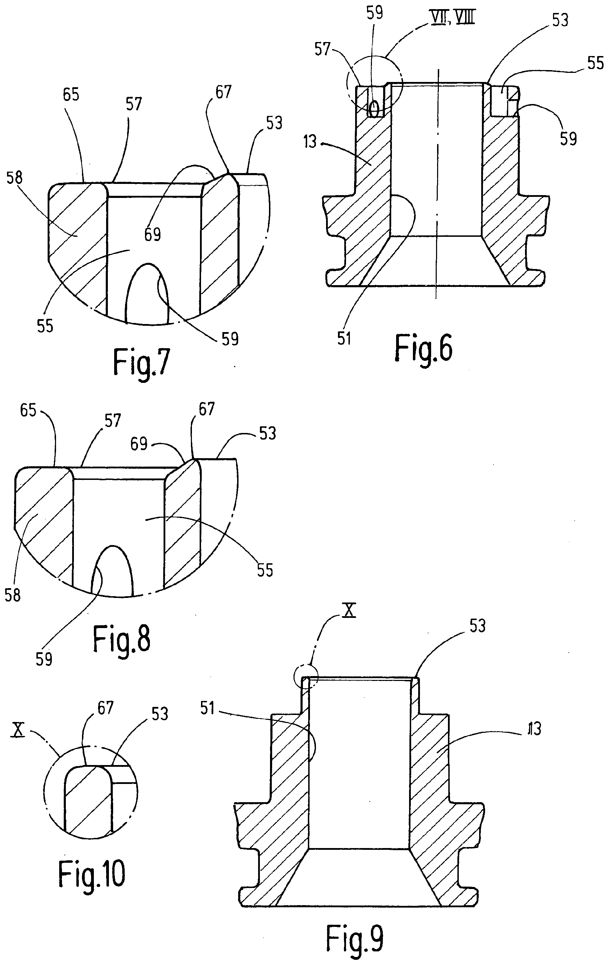

Die Fig. 6 bis 10 zeigen weitere Varianten des Ventilsitzkörpers 13 für das erfindungsgemäße Ventil. Dabei betreffen die Fig. 6 bis 8 jeweils einen Ventilsitzkörper 13, an dem sowohl eine Dichtfläche 53, die in geschlossener Linie den Medienkanal 51 umgibt, als auch Stützflächen 57 vorgesehen sind. Letztere umgeben, wie dies auch bei dem Sitzkörper 13 von Fig. 2 der Fall ist, als Ringkörper einen vertieften Ringraum 55, in dem Bohrungen 59 als Mediendurchlässe vorgesehen sind. Eine Besonderheit gegenüber der Ausführungsform von Fig. 2 besteht darin, dass Dichtfläche 53 und Stützfläche 57 in parallelen Ebenen liegen, die geringfügig zueinander versetzt sind, so dass sich die Ebene der Stützfläche 57 in einem größeren Abstand vom Ventilkörper 15; 22 des Ventils befindet, wie dies aus Fig. 7 und 8 deutlich erkennbar ist. Als weitere Besonderheit ist das abgerundete Ende der die Dichtfläche 53 bildenden Rippe speziell so geformt, dass zwischen den Seitenrändern ein schmaler Kontaktbereich 67 für die Anlage an der Dichtplatte 19; 53 vorgesehen ist, wobei bei der Ausführungsform von Fig. 8 eine steilere Rampe 69 vom Innenrand zum schmalen Kontaktbereich 67 hin verläuft. Die Stützfläche 57 weist zwischen den abgerundeten Rändern jeweils ein ebenes Flächenstück 65 auf.

Die Fig. 9 und 10 zeigen eine weiter abgewandelte Form des Ventilsitzkörpers 13, wobei keine Stützfläche 57 vorhanden ist. Die ringförmige Dichtfläche 53 ist, wie die Fig. 10 in vergrößerter Darstellung zeigt, derart geformt, dass zwischen gerundeten Rändern ein ebenflächiger Kontaktbereich 67 gebildet ist.

## Patentansprüche

1. Ventil, insbesondere Proportional-Druckregelventil für pneumatische Anwendungen, mit einem Ventilkörper (15; 22), der zur Regelung eines Medienflusses zwischen zumindest einem ersten (7; P) und einem zweiten Medienanschluss (9; A) mittels einer Betätigungseinrichtung (27) längs einer Verfahrachse (5) zwischen einer Schließstellung, in der er durch Anlage an einem Sitzkörper (13) den Mediendurchfluss sperrt, und vom Ventilsitzkörper (13) abgehobenen Regelstellungen verfahrbar ist, wobei der Sitzkörper (13) eine Dichtfläche (53) aufweist, die in einer zur Verfahrachse (5) senkrechten Ebene liegt und in geschlossener Linie die Mündung eines Medienkanals (51) umgibt, der sich vom ersten Medienanschluss (7; P) in Richtung auf den Ventilkörper (15; 22) erstreckt, und dass der Ventilkörper (15; 22) eine vorzugsweise plattenförmig ausgebildete Dichteinrichtung (19; 46) aufweist, die mit ihrer Schließfläche mit der Dichtfläche (53) zusammenwirkt, **dadurch gekennzeichnet, dass** der Sitzkörper (13) mindestens eine Stützfläche (57) aufweist, die in einer zu der Dichtfläche (53) parallelen Ebene liegt und die Dichtfläche (53) in einem Abstand umgibt, und dass an der Stützfläche (57) mindestens ein Mediendurchlass (59, 61) gebildet ist, der eine Verbindung zwischen dem zweiten Medienanschluss (9; A) und dem zwischen Stützfläche (57) und Dichtfläche (53) befindlichen Raum (55) bildet, und dass Dichtfläche (53) und Stützfläche (57) in einer gemeinsamen, zur Verfahrachse (5) senkrechten Ebene liegen.

2. Ventil nach Anspruch 1, **dadurch gekennzeichnet, dass** die Stützfläche (57) an einem Ringkörper (58) gebildet ist, der zwischen sich und der Dichtfläche (53) einen Raum (55) in Form einer axialen Vertiefung des Sitzkörpers (13) umgibt, und dass als Mediendurchlass mindestens eine Bohrung (59) im Ringkörper (58) vorgesehen ist.

3. Ventil nach einem der vorstehenden Ansprüche, **dadurch gekennzeichnet, dass** die Stützfläche (57) an Ringsegmenten (62) gebildet ist, die die Dichtfläche (53) im Abstand umgeben, und dass als Mediendurchlass mindestens eine Lücke (61) zwischen aufeinanderfolgenden Ringsegmenten (62) vorgesehen ist.

4. Ventil nach einem der vorstehenden Ansprüche, **dadurch gekennzeichnet, dass** Dichtfläche (53) und Stützfläche (57) kreisrund und zur Verfahrachse (5) konzentrisch sind und dass die zwischen ihnen befindliche Vertiefung die Form eines Ringraums (55) besitzt.

5. Ventil nach einem der vorstehenden Ansprüche, **dadurch gekennzeichnet, dass** die Stützfläche (57) in einer Ebene liegt, die vom Ventilkörper (15; 22) geringfügig weiter entfernt ist als die Ebene der Dichtfläche (53).

6. Ventil nach einem der vorstehenden Ansprüche, **dadurch gekennzeichnet, dass** Dichtfläche (53) und Stützfläche (57) die Form von ringförmigen, am freien Ende gerundeten Rippen aufweisen.

7. Ventil nach einem der vorstehenden Ansprüche, **dadurch gekennzeichnet, dass** eine aus einem Elastomer oder einem Gummi-Metall-Verbundteil gebildete Dichtplatte (19; 46) der Dichteinrichtung am Ventilkörper (15; 22) vorgesehen ist.

8. Ventil nach einem der vorstehenden Ansprüche, **dadurch gekennzeichnet, dass** der Ventilkörper (15; 22) mittels einer Schließfeder (21; 34) in die Schließstellung vorgespannt und mittels der Betätigungseinrichtung (27) gegen die Kraft der Feder (21; 34) aus der Schließstellung bewegbar ist.

9. Ventil nach einem der vorstehenden Ansprüche, **dadurch gekennzeichnet, dass** die Betätigungseinrichtung (27) einen im Polrohr (35) einer Elektromagneteinrichtung (29) bewegbaren Anker (31) aufweist, der über einen sich aus dem Polrohr (35) erstreckenden, axialen Fortsatz (37) mit dem Ventilkörper (15) verbunden ist, und dass die Schließfeder (21) den Fortsatz (27) umgibt und zwischen dem Ventilkörper (15) und einem außerhalb des Polrohres (35) befindlichen Teil (23) des Ventilgehäuses (1) eingespannt ist.

10. Ventil nach einem der vorstehenden Ansprüche, **dadurch gekennzeichnet, dass** der im Sitzkörper (13) befindliche Medienkanal (51) dem druckseitigen Medienanschluss (7; P) zugeordnet ist und der weitere Medienanschluss (9; A) am Ventilgehäuse (1) in einen Raum (3; 14) mündet, der über den zumindest einen Mediendurchlass (59; 61) im Sitzkörper (13) mit dem Raum (55) zwischen Dichtfläche (53) und Stützfläche (57) in Verbindung ist.

11. Ventil nach einem der vorstehenden Ansprüche, **dadurch gekennzeichnet, dass** der in Radialrichtung gemessene Querschnitt der Stützfläche (57) größer ist als derjenige der Dichtfläche (53).

12. Ventil nach einem der vorstehenden Ansprüche, **dadurch gekennzeichnet, dass** die Rippenform der Stützfläche (57) derart ist, dass zwischen seitlichen Rundungen ein ebenes Flächenstück (65) gebildet ist.

13. Ventil nach einem der vorstehenden Ansprüche, **dadurch gekennzeichnet, dass** die Rippenform bei der Dichtfläche (53) derart ist, dass zwischen den Flächenrändern ein erhabener, schmaler Kontaktbereich (67) für die Anlage an der Dichtplatte (19; 46) des Ventilkörpers (15; 22) gebildet ist.

14. Ventilanordnung, die insbesondere für pneumatische Anwendungen vorgesehen ist und mehr als ein Ventil (4, 6) gemäß einem der Ansprüche 1 bis 10 aufweist, **dadurch gekennzeichnet, dass** sie in einem Ventilgehäuse (1) mit druckseitigem Medienanschluss (P), mit mindestens einem Verbraucheranschluss (A) und mit einem Tankanschluss (T) außer einem in Druckregelfunktion arbeitenden ersten Ventil (4) ein zur Druckbegrenzung dem Tankanschluss (T) oder der Atmosphäre zugeordnetes zweites Ventil (6) aufweist.

## Claims

1. A valve, in particular a proportional pressure control valve for pneumatic applications, comprising a valve body (15; 25) which, in order to control a flow of medium between at least a first (7; P) and a second medium terminal (9; A), can be moved by means of an operating device (27) along an axis of displacement (5) between a closed position, in which it blocks the passage of medium by abutting against a seat body (13), and control positions in which it is raised from the valve seat body (13), the seat body (13) having a sealing surface (53) which lies in a plane perpendicular to the axis of displacement (5) and surrounds the opening of a medium channel (51) in a closed line, which channel extends from the first medium terminal (7; P) towards the valve body (15; 22), and that the valve body (15; 22) has a sealing device (19; 46) preferably in the form of a plate and the closing surface of which interacts with the sealing surface (53), **characterised in that** the seat body (13) has at least one supporting surface (57) which lies in a plane parallel to the sealing surface (53) and surrounds the sealing surface (53) a distance away from the latter, and that at least one medium passage (59, 61) is formed on the supporting surface (57), which passage forms a connection between the second medium terminal (9; A) and the space (55) located between the supporting surface (57) and the sealing surface (53), and that the sealing surface (53) and the supporting surface (57) lie in a common plane perpendicular to the axis of displacement (5).

2. The valve according to Claim 1, **characterised in that** the supporting surface (57) is formed on an annular body (58) which surrounds between it and the sealing surface (53) a space (55) in the form of an axial indentation of the seat body (13), and that at least one bore hole (59) is provided in the annular body (58) as a medium passage.

3. The valve according to any of the preceding claims, **characterised in that** the supporting surface (57) is formed on annular segments (62) which surround, a distance away, the sealing surface (53), and that at least one gap (61) is provided between consecutive annular segments (62) as a medium passage.

4. The valve according to any of the preceding claims, **characterised in that** the sealing surface (53) and the supporting surface (57) are circular and concentric to the axis of displacement (5), and that the indentation located between them is in the form of an annular space (55).

5. The valve according to any of the preceding claims, **characterised in that** the supporting surface (57) lies in a plane which is slightly further away from the valve body (15; 22) than the plane of the sealing surface (53).

6. The valve according to any of the preceding claims, **characterised in that** the sealing surface (53) and the supporting surface (57) are in the form of annular ribs which are rounded at their free end.

7. The valve according to any of the preceding claims, **characterised in that** a sealing plate (19; 46) of the sealing device formed from an elastomer or a rubber/metal composite part is provided on the valve body (15; 22).

8. The valve according to any of the preceding claims, **characterised in that** the valve body (15; 22) is pre-tensioned into the closed position by means of a closing spring (21; 34) and can be moved out of the closed position against the force of the spring (21; 34) by means of the operating device (27).

9. The valve according to any of the preceding claims, **characterised in that** the operating device (27) has an armature (31) that can be moved within the pole tube (35) of an electromagnet device (29), which armature is connected to the valve body (15) by means of an axial extension (37) extending out of the pole tube (35), and that the closing spring (21) surrounds the extension (27) and is clamped between the valve body (15) and a part (23) of the valve housing (1) located outside of the pole tube (35).

10. The valve according to any of the preceding claims, **characterised in that** the medium channel (51) located within the seat body (13) is assigned to the pressure-side medium terminal (7; P), and the other medium terminal (9; A) on the valve housing (1) opens into a space (3; 14) which is connected to the space (55) between the sealing surface (53) and the supporting surface (57) by means of the at least one medium passage (59; 61) within the seat body (13).

11. The valve according to any of the preceding claims, **characterised in that** the cross-section of the supporting surface (57) measured in the radial direction is greater than that of the sealing surface (53).

12. The valve according to any of the preceding claims, **characterised in that** the rib-form of the supporting surface (57) is such that a level surface piece (65) is formed between lateral roundings.

13. The valve according to any of the preceding claims, **characterised in that** the rib-form on the sealing surface (53) is such that a raised, narrow contact region (67) for resting against the sealing plate (19; 46) of the valve body (15; 22) is formed between the surface edges.

14. A valve arrangement that is provided in particular for pneumatic applications and that has more than one valve (4, 6) according to any of Claims 1 to 10, **characterised in that**, in a valve housing (1) with a pressure-side medium terminal (P), with at least one consumer terminal (A), and with a tank terminal (T), it has a second valve (6) assigned to the tank terminal (T) or to the atmosphere for limiting

## Revendications

1. Soupape, notamment soupape de réglage de la pression proportionnelle, pour des utilisations pneumatiques, comprenant un obturateur (15; 22), qui, pour réguler un flux de fluide entre au moins un premier (7; P) et un deuxième raccord (9; A) pour du fluide, peut, au moyen d'un dispositif (27) d'actionnement, être déplacé le long d'un axe (5) de déplacement entre une position de fermeture, dans laquelle il empêche le passage par application sur un siège (13), et des positions de réglage soulevées du siège (13), le siège (13) ayant une surface (53) d'étanchéité, qui se trouve dans un plan perpendiculaire à l'axe (5) de déplacement, qui entoure en ligne fermée l'embouchure d'un conduit (51) pour du fluide s'étendant du premier raccord (7; P) pour du fluide en direction de l'obturateur (15; 22), et en ce que l'obturateur (15; 22) a un dispositif (19; 46) d'étanchéité, qui est constitué, de préférence, sous la forme d'une plaque et qui coopère, par sa surface de fermeture, avec la surface (53) d'étanchéité, **caractérisée en ce que** le siège (13) a au moins une surface (57) d'appui, qui est dans un plan parallèle à la surface (53) d'étanchéité et qui entoure la surface (53) d'étanchéité à une certaine distance, et **en ce que**, sur la surface (57) d'appui, est formé au moins un passage (59, 61) pour du fluide, qui forme une liaison entre le deuxième raccord (9; A) pour du fluide et l'espace (55) se trouvant entre la surface (57) d'appui à la surface (53) d'étanchéité, et **en ce que** la surface (53) d'étanchéité et la surface (57) d'appui sont dans un plan commun perpendiculaire à l'axe (5) de déplacement.

2. Soupape suivant la revendication 1, **caractérisée en ce que** la surface (57) d'appui est formée sur une pièce (58) annulaire, qui entoure, entre elle et la surface (53) d'étanchéité, un espace (55) sous la forme d'une cavité axiale du siège (13) et **en ce qu'**il est prévu, comme passage pour du fluide, au moins un trou (59) dans la pièce (58) annulaire.

3. Soupape suivant l'une des revendications précédentes, **caractérisée en ce que** la surface (57) d'appui est formée sur des segments (62) annulaires, qui entourent, à une certaine distance, la surface (53) d'étanchéité, et **en ce qu'**il est prévu, comme passage pour du fluide, au moins une lacune (61) entre des segments (62) annulaires, qui se succèdent.

4. Soupape suivant l'une des revendications précédentes, **caractérisée en ce que** la surface (53) d'étanchéité et la surface (57) d'appui sont circulaires et sont concentriques à l'axe (5) de déplacement et **en ce que** la cavité se trouvant entre elles a la forme d'un espace (55) annulaire.

5. Soupape suivant l'une des revendications précédentes, **caractérisée en ce que** la surface (57) d'appui est dans un plan, qui est un peu plus éloigné de l'obturateur (15; 22) que le plan de la surface (53) d'étanchéité.

6. Soupape suivant l'une des revendications précédentes, **caractérisée en ce que** la surface (53) d'étanchéité et la surface (57) d'appui ont la forme de nervures annulaires, arrondies à l'extrémité libre.

7. Soupape suivant l'une des revendications précédentes, **caractérisée en ce qu'**une plaque (19; 46) d'étanchéité en un élastomère ou en une partie composite caoutchouc-métal, du dispositif d'étanchéité, est prévue sur l'obturateur (15; 22).

8. Soupape suivant l'une des revendications précédentes, **caractérisée en ce que** l'obturateur (15; 22) est précontraint dans la position de fermeture au moyen d'un ressort (21; 34) de fermeture et peut être mis hors de la position de fermeture au moyen du dispositif (27) d'actionnement à l'encontre de la force de ressort (21; 34).

9. Soupape suivant l'une des revendications précédentes, **caractérisée en ce que** le dispositif (27) d'actionnement a une armature (31), qui est mobile dans un tube (35) polaire d'un dispositif (29) d'électroaimant et qui est reliée à l'obturateur (15) par un prolongement (37) axial sortant du tube (35) polaire, et **en ce que** le ressort (21) de fermeture entoure le prolongement (27) et est bandé entre l'obturateur (15) et une partie (23), se trouvant à l'extérieur du tube (35) polaire, du corps (1) de la soupape.

10. Soupape suivant l'une des revendications précédentes, **caractérisée en ce que** le conduit (51) pour du fluide se trouvant dans le siège (13) est associé au raccord (7; P) pour du fluide du côté de la pression et l'autre raccord (9; A) pour du fluide du corps (1) de la soupape débouche dans un espace (3; 14), qui est, par le au moins un passage (59; 61) pour du fluide du siège (13), en communication avec l'espace (55) entre la surface (53) d'étanchéité et la surface (57) d'appui.

11. Soupape suivant l'une des revendications précédentes, **caractérisée en ce que** la section transversale mesurée dans la direction radiale de la surface (57) d'appui est plus grande que celle de la surface (53) d'étanchéité.

12. Soupape suivant l'une des revendications précédentes, **caractérisée en ce que** la forme nervurée de la surface (57) d'appui est telle qu'il est formé une pièce (65) de surface plane entre des arrondis latéraux.

13. Soupape suivant l'une des revendications précédentes, **caractérisée en ce que** la forme nervurée de la surface (53) d'étanchéité est telle qu'il est formé, entre les bords de surface, une zone (67) de contact étroite en saillie pour l'application sur la plaque (19; 46) d'étanchéité de l'obturateur (15; 22).

14. Agencement de soupape, prévu notamment pour des utilisations pneumatiques et qui a plus qu'une soupape (4, 6) suivant l'une des revendications 1 à 10, **caractérisé en ce qu'**il a, dans un corps (1) de soupape ayant un raccord (P) pour du fluide du côté de la pression, au moins un raccord (A) de consommateur et un raccord (T) de réservoir, outre une première soupape (4) travaillant en fonction de régulation de la pression, une deuxième soupape (6) pour la limitation de la pression associée au raccord (T) de réservoir ou à l'atmosphère.
